**Europäisches Patentamt**

**European Patent Office**

**Office européen des brevets**

(11) Publication number: **0 137 855**
**B1**

(12) **EUROPEAN PATENT SPECIFICATION**

(45) Date of publication of patent specification: **16.05.90**

(51) Int. Cl.⁵: **G 11 B 5/09**

(21) Application number: **84901011.1**

(22) Date of filing: **02.03.84**

(86) International application number:
**PCT/JP84/00081**

(87) International publication number:
**WO 84/03580 13.09.84 Gazette 84/22**

(54) **DATA TRANSFER SYSTEM USING DIGITAL DISC.**

(30) Priority: **04.03.83 JP 35459/83**

(43) Date of publication of application:
**24.04.85 Bulletin 85/17**

(45) Publication of the grant of the patent:
**16.05.90 Bulletin 90/20**

(84) Designated Contracting States:
**AT DE FR GB NL**

(56) References cited:
**WO-A-81/00160**    **JP-A-57 136 684**
**JP-A-5 137 601**    **US-A-4 211 997**
**JP-A-5 727 410**    **US-A-4 224 642**

**IBM TECHNICAL DISCLOSURE BULLETIN, vol. 18, no. 5, October 1975, page 1577, New York, US; N.K. OUCHI: "Tape defect bypass mechanism"**

**Doi Tadashi and one other (authors) "Digital Audio" 20 April 1982 Radio Gijutsusha (Tokyo), P. 299, line 31 to P. 300, line 8**

(73) Proprietor: **SONY CORPORATION**
**7-35 Kitashinagawa 6-Chome Shinagawa-ku Tokyo 141 (JP)**

(72) Inventor: **SUZUKI, Tadao**
**Sony Corporation 7-35, Kitashinagawa 6-chome Shinagawa-ku Tokyo 141 (JP)**
Inventor: **NAKAMURA, Shoichi**
**Sony Corporation 7-35, Kitashinagawa 6-chome Shinagawa-ku Tokyo 141 (JP)**
Inventor: **NISHIOKA, Hisao**
**Sony Corporation 7-35, Kitashinagawa 6-chome Shinagawa-ku Tokyo 141 (JP)**
Inventor: **OKUBO, Yutaka**
**Sony Corporation 7-35, Kitashinagawa 6-chome Shinagawa-ku Tokyo 141 (JP)**

(74) Representative: **Thomas, Christopher Hugo et al**
**D Young & Co 10 Staple Inn London WC1V 7RD (GB)**

(56) References cited:

**Philips Techn. Rundschau 40, No. 6, p. 171**
**AES Audio Engeneering Society Preprint 31.1080, p. 1-14**

## Description

This invention relates to data recording using a digital disc.

AES Audio Engineering Society Preprint "The Compact Disc Digital Audio System: Modulation and Error-Correction", 31 October 1980, pages 1 to 14 discloses the interleaving of groups of odd and even samples on a compact disc as in the precharacterizing part of claim 1.

Philips tech. Rev. 40, No. 6, 1982, pages 166 to 172 discloses the recording of audio display and control data in the same frame and block. PCT patent specification WO 81/00160 and US patent specification US—A—4 211 997 disclose both odd/even interleaving and also double recording of data. It is an object of the present invention to provide a method of data recording using a digital disc which can transmit digital data other than audio signals.

According to the present invention there is provided a method of data recording using a digital disc, wherein even-numbered designated and odd-numbered designated data words are interleaved and are recorded on said disc as signal tracks in the circumferential direction for subsequent reproduction;

said data being recorded in blocks each comprising a plurality of frames;

characterized in that:

each said block comprises digital data and control data which are used for controlling the processing of said digital data, said control data being recorded at least twice at a predetermined interval in each said block; and

said digital data comprise different forms of data such as digitally encoded audio signals selectively having different sampling frequencies or different numbers of quantization bits, and digital data such as display data and programme data, a code signal indicating the form of said data being recorded in every said frame.

Optical type digital audio discs (compact discs) can reproduce stereophonic music of high quality. When, using a method according to the present invention, digital data such as display data or programme data can be recorded on and reproduced from a compact disc, then it becomes possible to realise an apparatus for reproducing video information such as graphic diagrams and statistics, still pictures, or video games. In addition, by recording audio and video information it becomes possible to record, for example, an art collection, or a traveller's guide or an educational programme.

The invention will now be described by way of example with reference to the accompanying drawings, throughout which like parts are referred to by like references, and in which:

Figures 1 and 2 are schematic diagrams for explaining a data arrangement on a compact disc;

Figures 3A and 3B are block diagrams of an error correction encoder;

Figure 4A and 4B are block diagrams showing a decoder corresponding to the encoder of Figure 3;

Figures 5 and 6 are diagrams for explaining a decoding operation;

Figure 7 is a block diagram of apparatus for performing a method according to the present invention;

Figures 8 to 13 are schematic diagrams for explaining data arrangements;

Figures 14 to 17 are schematic diagrams for explaining an audio mode;

Figures 18 and 19 are schematic diagrams for explaining a data mode;

Figures 20 to 23 are schematic diagrams showing alternative data arrangements; and

Figure 24 is a block diagram of another apparatus for performing a method according to the present invention.

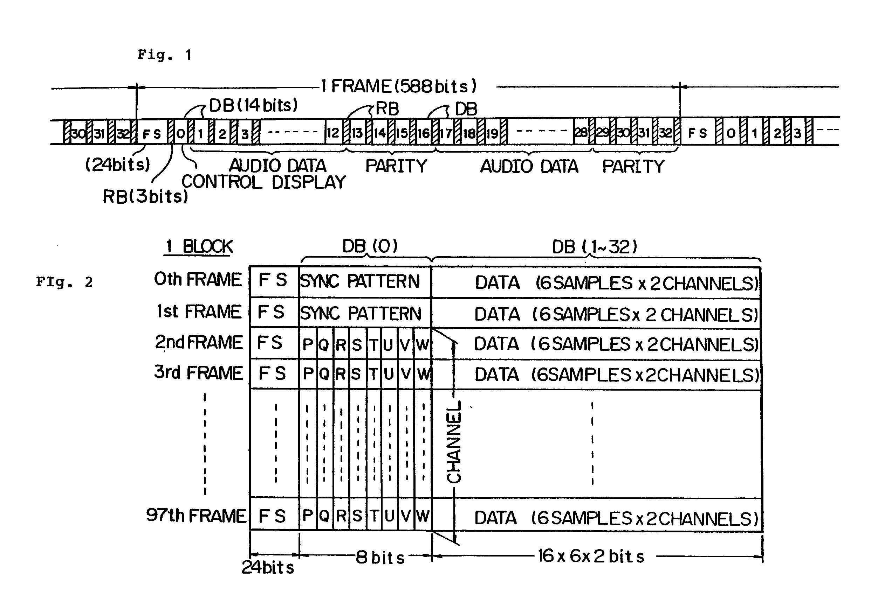

Figure 1 shows a data stream recorded on a compact disc. One frame consists of 588 bits of recording data. Three DC component suppression bits RB are provided after a frame sync signal FS of a particular bit pattern at the beginning of every frame. Thereafter, 0th to 32nd data bit words DB each consisting of fourteen bits, and three bits RB are arranged alternately. The 0th word DB is a subcoding or user's signal, and is used for controlling the playback of the disc, the display of the relevant information, and the like. The 1st to 12th and the 17th to 28th words DB are allocated to the audio data in the main channel, while the remaining 13th to 16th and the 29th to 32nd words DB are allocated to parity data for error correction codes in the main channel. Each word DB results from 8-to-14 conversion (EFM or eight-fourteen modulation) of input 8-bit data for recording. Processing is performed on a 98-frame block of the digital signal described above.

Figure 2 shows 98 frames sequentially arranged in parallel, it being assumed that each word DB is of eight bits. Sub-coding signals P to W in the 0th and 1st frames form predetermined sync patterns. In the Q channel, CRC codes for error detection are inserted into the last sixteen of the 98 frames.

The P-channel signal may be a flag to indicate a pause or a music programme, and is set to low for a music programme and high for a pause. A pulse of period 2 Hz is arranged in the lead-out interval. Therefore, by detecting and counting the P channel, designated music programmes can be selected and reproduced. Using the Q channel, similar or more complicated control can be performed. For instance, the information in the Q channel can be stored in a microcomputer provided for the disc reproducing apparatus to enable the random selection of music programmes for reproduction. The R to W channels are used for a lyricist, composer, explanation, text, etc of the music programme recorded on the disc or to explain them by voice.

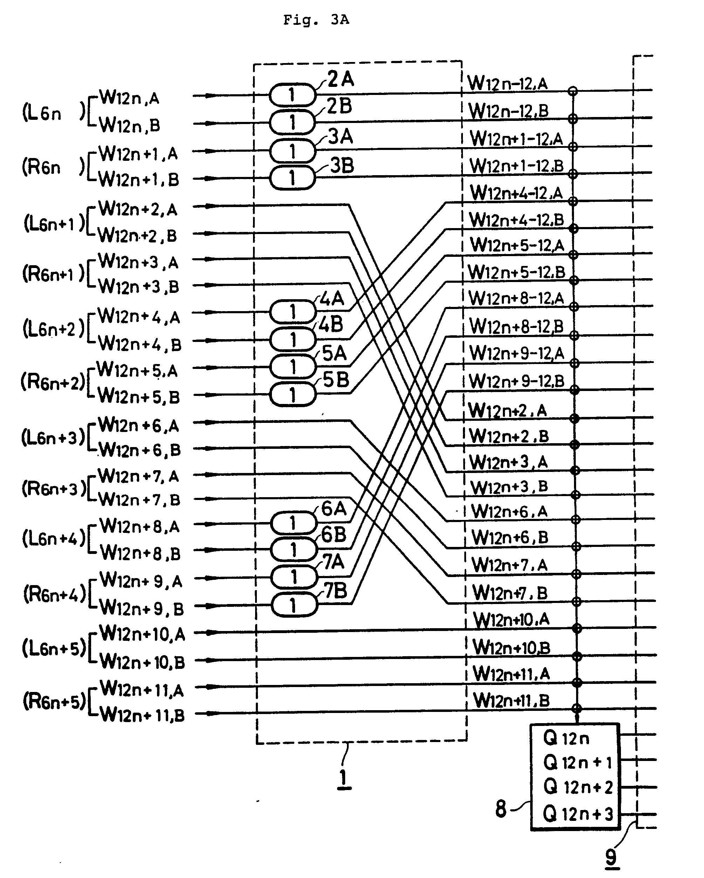

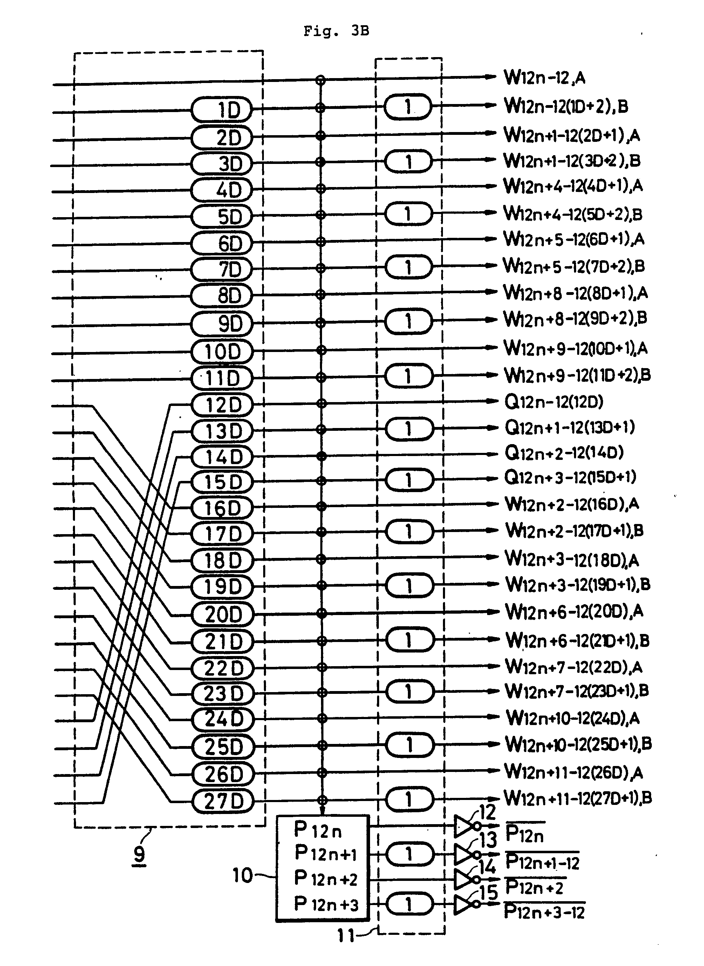

The words DB in each frame are error correction coded as 8-bit data before EFM by an encoder as shown in Figures 3A and 3B.

The audio PCM signal supplied to the input of the encoder is formed by sampling the right and left stereo signals at a sampling frequency $f_s$ (for example, 44.1 kHz) and by converting each sample to one word (16-bit 2s-complement code). Therefore, for the left channel, successive PCM data words such as $L_0$, $L_1$, $L_2$, ... are obtained, while for the right channel PCM data words such as $R_0$, $R_1$, $R_2$, ... are obtained. These PCM data words are both divided into six channels to give a total of twelve input channels. At a predetermined timing, twelve words $L_{6n}$, $R_{6n}$, $L_{6n+1}$, $R_{6n+1}$, $L_{6n+2}$, $R_{6n+2}$, $L_{6n+3}$, $R_{6n+3}$, $L_{6n+4}$, $R_{6n+4}$ are supplied. In this example, one word is divided into the more and less significant eight bits, so the twelve channels are further processed as 24 channels. For the purpose of simplicity, one word of the PCM data is indicated by $W_i$ and a suffix A is added ($W_{i,A}$) for the more significant eight bits, and a suffix B is added ($W_{i,B}$) for the less significant eight bits. For example, $L_{6n}$, becomes $W_{12n,A}$ and $W_{12n,B}$.

This PCM data series of 24 channels is first supplied to an even/odd interleave circuit 1. Assuming that n=0, 1, 2, ..., the even-numbered designated words consist of:

$$L_{6n}(=W_{12n,A},\ W_{12n,B}),$$
$$R_{6n}(=W_{12n+1,A},\ W_{12n+1,B}),$$
$$L_{6n+2}(=W_{12n+4,A},\ W_{12n+4,B}),$$
$$R_{6n+2}(=W_{12n+5,A},\ W_{12n+5,B}),$$
$$L_{6n+4}(=W_{12n+8,A},\ W_{12n+8,B}),$$
$$R_{6n+4}(=W_{12n+9,A},\ W_{12n+9,B}),$$

respectively, while the other words are the odd-numbered designated words. The respective PCM data series consisting of the even-number designated words are delayed by one-word delay circuits 2A, 2B, 3A, 3B, 4A, 4B, 5A, 5B, 6A, 6B, 7A and 7B of the interleave circuit 1, so that the twelve data series consisting of the even-number designated words occupy the 1st to 12th channels and the twelve data series consisting of the odd-number designated words occupy the 13rd to 24th channels.

The interleave circuit 1 prevents the occurrence of two or more successive error words, as correction of such errors would become impossible. For example, when considering three successive words such as $L_{i-1}$, $L_i$, $L_{i+1}$, in the case where $L_i$ is wrong and this error cannot be corrected, it is desired that $L_{i-1}$ or $L_{i+1}$ be correct to permit concealment of $L_i$ by front value holding using $L_{i-1}$, or by mean value interpolation using $L_{i-1}$ and $L_{i+1}$. The delay circuits 2A, 2B, to 7A, 7B of the interleave circuit 1 cause the successive words to be included in different error correction blocks. The transmission channels are formed of even-number designated words and odd-number designated words so as to make the distance between the recording locations of closely arranged even-number and odd-number designated words as large as possible when the data series are interleaved.

The 24-channel PCM data series in a first arrangement state appear at the output of the interleave circuit 1. Each word is derived from the respective PCM data series and is supplied to an encoder 8, so that first check words $Q_{12n}$, $Q_{12n+1}$, $Q_{12n+2}$, and $Q_{12n+3}$ are formed. The first error correction block assembled with the first check words is as follows:

$$W_{12n-12,A},\ W_{12n-12,B},\ W_{12n+1-12,A},$$
$$W_{12n+1-12,B},\ W_{12n+4-12,A},\ W_{12n+4-12,B},$$
$$W_{12n+5-12,A},\ W_{12n+5-12,B},\ W_{12n+8-12,A},$$
$$W_{12n+8-12,B},\ W_{12n+9-12,A},\ W_{12n+9-12,B},$$
$$W_{12n+2,A},\ W_{12n+2,B},\ W_{12n+3,A},$$
$$W_{12n+3,B},\ W_{12n+6,A},\ W_{12n+6,B},$$
$$W_{12n+7,A},\ W_{12n+7,B},\ W_{12n+10,A},$$
$$W_{12n+10,B},\ W_{12n+11,A},\ W_{12n+11,B},$$
$$Q_{12n},\ Q_{12n+1},\ Q_{12n+2},\ Q_{12n+3}$$

In the first encoder 8, the coding processing is performed whereby the number of words of one block is n=28, the number of bits of one word is m=8, and the number of check words is k=4.

As shown in Figure 3B, the 24 PCM data series and the four check word series are supplied to an interleave circuit 9 in which delay processing is performed to interleave the locations of the transmission channels such that the check word series are interposed between the PCM data series consisting of the even-number designated words and the PCM data series consisting of the odd-number designated words. This processing is carried out by delay circuits having delays of 1D, 2D, 3D, 4D, ..., 26D and 27D (where D represents a unit delay amount, for example four words) for the 27 channels respectively, excluding the first channel.

The 28 data series in a second arrangement state appear at the output of the interleave circuit 9. Each word is derived from these respective data series and is supplied to an encoder 10, so that second check words $P_{12n}$, $P_{12n+1}$, $P_{12n+2}$ and $P_{12n+3}$ are formed. A second error correction block consisting of 32 words with the second check words included as follows:

$$W_{12n-12,A},\ W_{12n-12(D+1),B},$$
$$W_{12n+1-12(2D+1),A},\ W_{12n+1-12(3D+1),B},$$
$$W_{12n+4-12(4D+1),A},\ W_{12n+4-12(5D+1),B},$$
$$W_{12n+5-12(6D+1),A},\ W_{12n+5-12(7D+1),B},\ \cdots,$$
$$Q_{12n-12(12D)},\ Q_{12n+1-12(13D)},\ Q_{12n+2-12(14D)},$$
$$Q_{12n+3-12(15D)},\ \cdots,\ W_{12n+10-12(24D),A},$$
$$W_{12n+10-12(25D),B},\ W_{12n+11-12(26D),A},$$
$$W_{12n+11-12(27D),B},\ P_{12n},\ P_{12n+1},$$
$$P_{12n+2},\ P_{12n+3}$$

An interleave circuit 11 of 1-word delay circuits is inserted in the even-number designated channels, and inverters 12, 13, 14 and 15 are inserted for the second check word series. The interleave circuit 11 improves error correction by dispersing errors over the boundaries of the blocks. The inverters 12 to 15 are provided to prevent all the data in one block becoming "0" due to drop-out, and appearing to be correct data in the reproducing system. An inverter may also be inserted for the first check word series for the same purpose.

Every 32 words derived from the respective 24 PCM data series and eight check word series as finally obtained are converted to serial data. As shown in Figures 1 and 2, the 16-bit sync signal and the sub-coding signal are added to the beginning of the serial data to obtain one frame which is ETM and recorded on the disc.

The encoder 8 produces Reed Solomon error correction codes of (n=28, m=8, k=4), while the encoder 10 produces Reed Solomon error correction codes of (n=32, m=8, k=4).

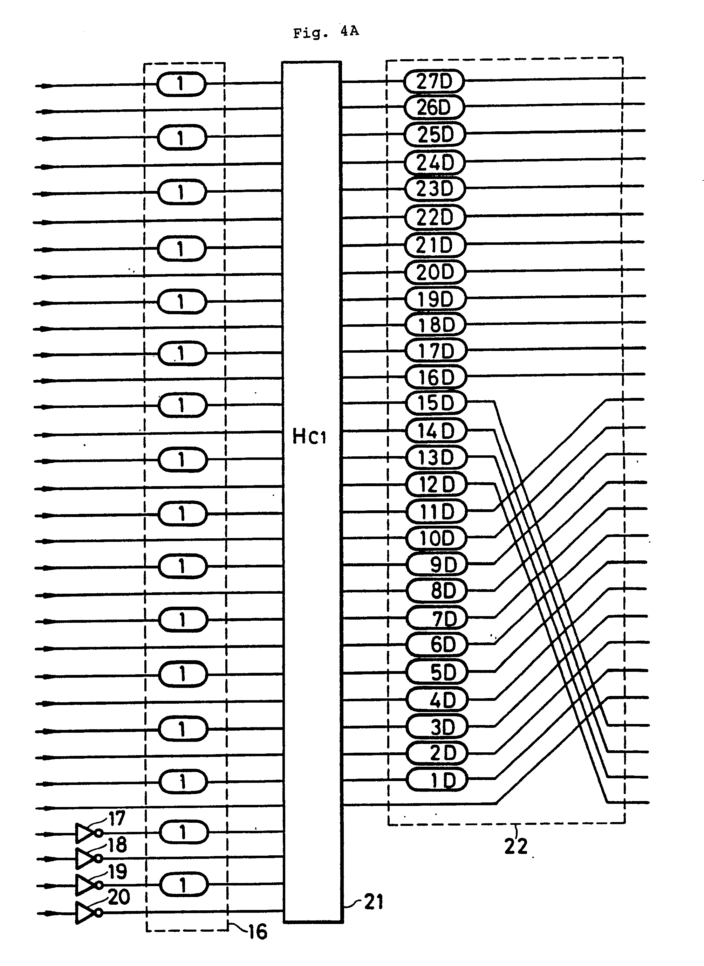

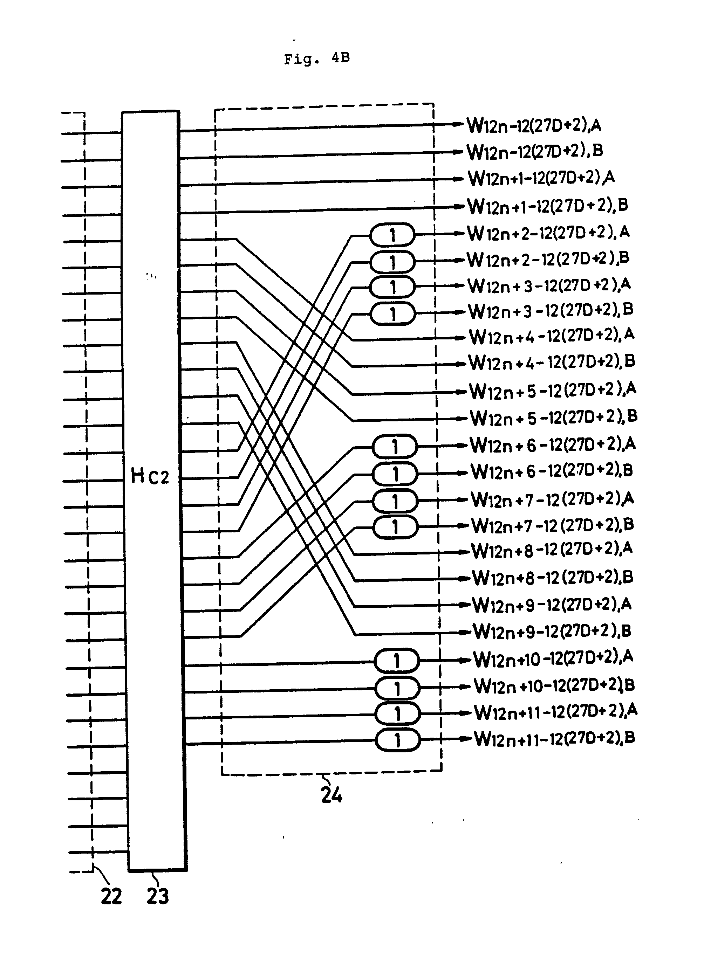

Upon reproduction of the words DB, every 32 words of one frame are supplied to the input of an error correction decoder shown in Figures 4A and 4B. There is a possibility the reproduced words DB include errors. If no error is detected, the 32 words which are supplied to the input of this decoder coincide with the 32 words which appear at the output of the error correction encoder. In the error correction decoder, deinterleaving corresponding to the interleaving in the encoder is performed, to return the data sequence to the original sequence. Thereafter, the error correction is performed.

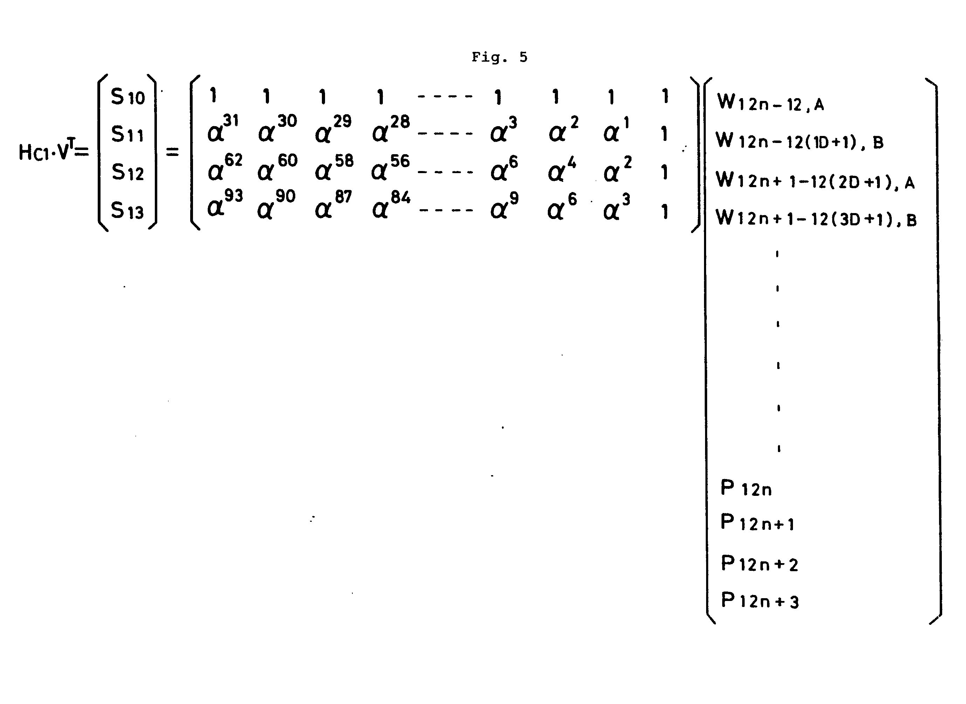

First, a deinterleave circuit 16 with one-word delay circuits for the odd-number designated channels is provided. Also, inverters 17, 18, 19 and 20 are provided for the check word series, and the data are supplied to a decoder 21 at the first stage. As shown in Figure 5, in the decoder 21, syndromes $S_{10}$, $S_{11}$, $S_{12}$ and $S_{13}$ are generated from a parity check matrix $H_{c1}$ and 32 words ($V^T$), and error correction is performed in known manner on the basis of those syndromes. $\alpha$ denotes an element of a Galois field ($2^8$) of

$$F(x)=x^8+x^4+x^3+x^2+1.$$

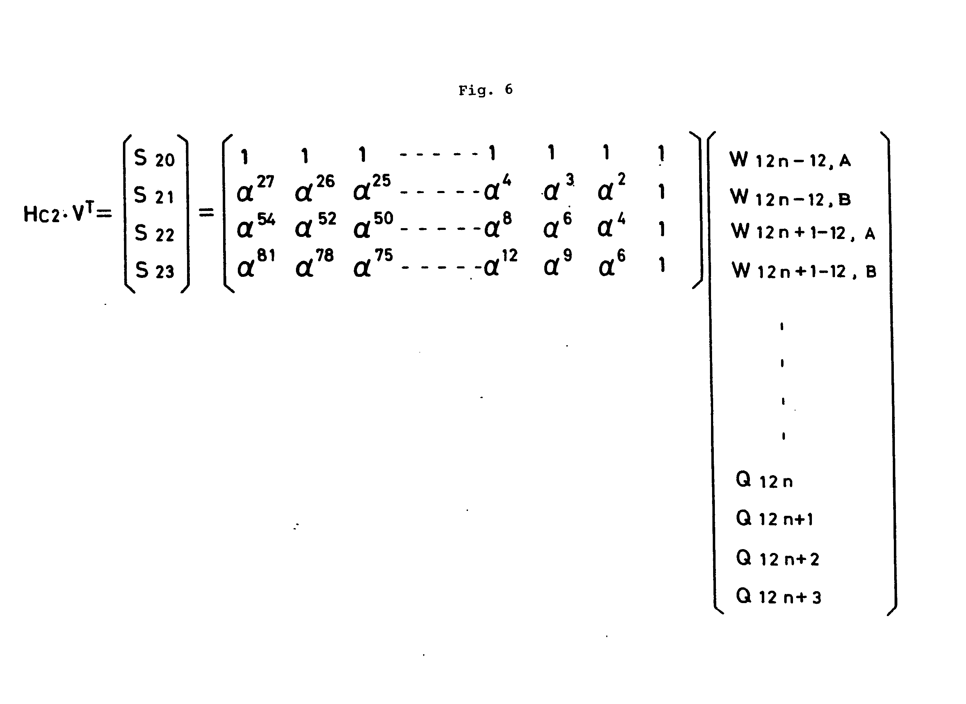

The 24 PCM data series and the four check word series are supplied from the decoder 21. A flag of at least one bit ("1" when an error is detected; "0" when no error is detected) indicative of the presence and absence of error is added for every word of these data series. In Figures 5 and 6 and in the following description, each word received is expressed as $W_i$. The output data series of the decoder 21 are supplied to a deinterleave circuit 22 which compensates for the delay in the interleave circuit 9 in the error correction encoder. Delay circuits having different delay amounts 27D, 26D, 25D, . . ., 2D, 1D are inserted in the 1st to 27th channels, respectively. The outputs of the deinterleave circuit 22 are supplied to a decoder 23 at the next stage as shown in Figure 4B. As shown in Figure 6, in the decoder 23, syndromes $S_{20}$, $S_{21}$, $S_{22}$ and $S_{23}$ are generated from a parity check matrix $H_{c2}$ and the 28 word input. Error correction is carried out on the basis of those syndromes.

The data series which appear at the outputs of the decoder 23 are supplied to an even/odd deinterleave circuit 24, in which the PCM data series consisting of the even-number designated words and the odd-number designated words are returned to the alternate channels. Also, one-word delay circuits are provided for the PCM data series consisting of the odd-number designated words. The PCM data series having exactly the same arrangement as that supplied to the inputs of the error correction encoder and having a predetermined designated number of channels are obtained from the outputs of the even/odd deinterleave circuit 24. A correcting circuit (not shown) is provided after the even/odd deinterleave circuit 24, for concealing errors which could not be corrected by the decoders 21 and 23, for example, by mean value interpolation.

However, in cases where there is no correlation between the data before and after the error data, such as in the case of a computer program interpolation is ineffective. The possibility of error correction by writing data twice in such cases will be mentioned later.

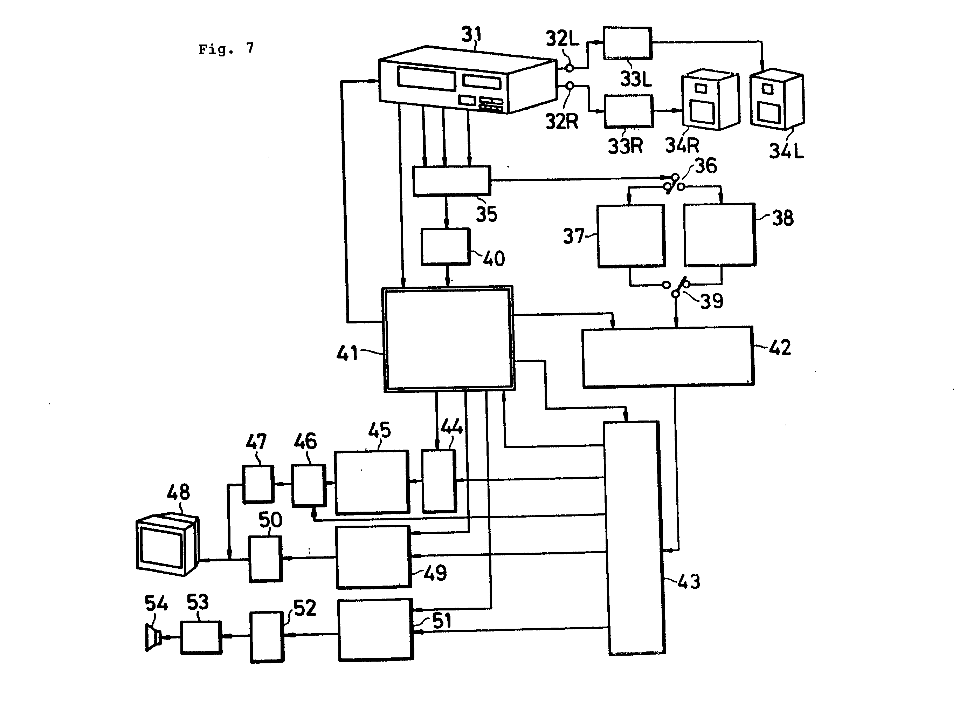

Figure 7 shows the whole arrangement of an apparatus for performing a method according to the present invention. Right and left-channel reproduced stereo signals are obtained at output terminals 32L and 32R respectively of a disc player 31, and are supplied to loudspeakers 34L and 34R through respective amplifiers 33L and 33R to reproduce a stereophonic music programme.

On the other hand, in the case where the disc which is reproduced by the player 31 carries digital data other than stereo music signals, the reproduced data are supplied to a series/parallel converter 35. A frame pulse and a bit clock synchronized with the reproduced data are supplied from the player 31 to the converter 35. The data converted to parallel data for every symbol (eight bits) are supplied from the converter 35 and is alternately written into buffer memories 37 and 38 through an input switch 36. A separating circuit 40 for the control data is provided in association with the converter 35.

A controller 41 consists of a microcomputer. The control data from the separating circuit 40 are supplied to the controller 41, and the sub-coding signal from the player 31 is also supplied to the controller 41. An identification code to indicate whether the signal recorded on the disc is a stereo music signal or digital signal is inserted in the Q-channel sub-coding signal. The controller 41 generates a control signal for controlling the switching of the reproduced output signal paths of the player 31 on the basis of that identification code, and supplies this control signal to the player 31.

In addition, the outputs of the buffer memories 37 and 38 are alternately read out by an output switch 39 and are supplied to a DMA controller 42. The buffer memories 37 and 38 are provided so that the reproduced data of the compact disc are read out at a high speed. The DMA controller 42 is controlled by the controller 41. For example, as will be mentioned later, in the case where the digital data are audio data, there are two numbers of bits forming one word, namely ten bits and twelve bits. These different numbers of bits are set in the DMA controller 42.

The output of the DMA controller 42 is supplied to a data selector 43 controlled by the controller 41, and which supplies the output data of the DMA controller 42 to different circuits in accordance with a graphic mode, still picture mode, audio mode and data mode. In the graphic mode, the display data are supplied to a CRT controller 44, and at the same time colour designation data for forming a colour look-up table for colour designation are supplied to the data input terminal of a RAM 46. A video RAM 45 is connected to the CRT controller 44. The output of the video RAM 45 becomes the read-out address supplied to the RAM 46. The display data of a predetermined colour specified by the look-up table are derived from the output of the RAM 46, and are converted to an analogue colour video signal by a D/A converter 47, for supplying to the input terminal of a CRT display 48 controlled by the controller 41.

In the still picture mode, image data constituted by the respective components Y, U and V are written in a frame memory 49. The write and read-out controls and address control of the frame memory 48 are performed by the controller 41. The still image data repeatedly read out for every frame from the frame memory 49 are converted to an analogue colour video signal by a D/A converter 50 and are supplied to the CRT display 48.

In the audio mode, the digital audio signal is supplied to an audio memory 51 and is processed to expand the time base and remove variation in the time base. The operation of the audio memory 51 is controlled by the controller 41. The audio data read out from the audio memory 51 are converted to an analogue audio signal by a D/A converter 52, and are supplied to a loudspeaker 54 through an amplifier 53. The clock pulses for the D/A converters 47, 50 and 52 are supplied from the controller 41.

In the data mode, the output of the data selector 43 is supplied to the controller 41. In this data mode, the compact disc is used as an external ROM. Data of a video game or other software are reproduced from the compact disc and are supplied to the controller 41 which generates a signal select signal for controlling the data selector 43 from the mode information included in the control data from the separating circuit 40.

In addition, there are cases where data corresponding to several of these four operating modes are to be recorded on one compact disc. In particular, it is useful to superimpose a still picture comprising data in the still picture mode and character indicating data in the graphic mode, or to generate a voice for explaining a displayed picture in the still picture mode or graphic mode by use of data in the audio mode.

A data format for such recording will now be described.

In one embodiment of this invention, the digital data are recorded on a compact disc in the same format as that of the data stream of the ordinary compact disc as shown in Figure 1. These digital data are encoded into the error correction code by the same method as for a stereo music signal mentioned previously, and the sub-coding signals consisting of the P to W channels are added before recording. One block of the digital data is constituted by the data having a length of two frames.

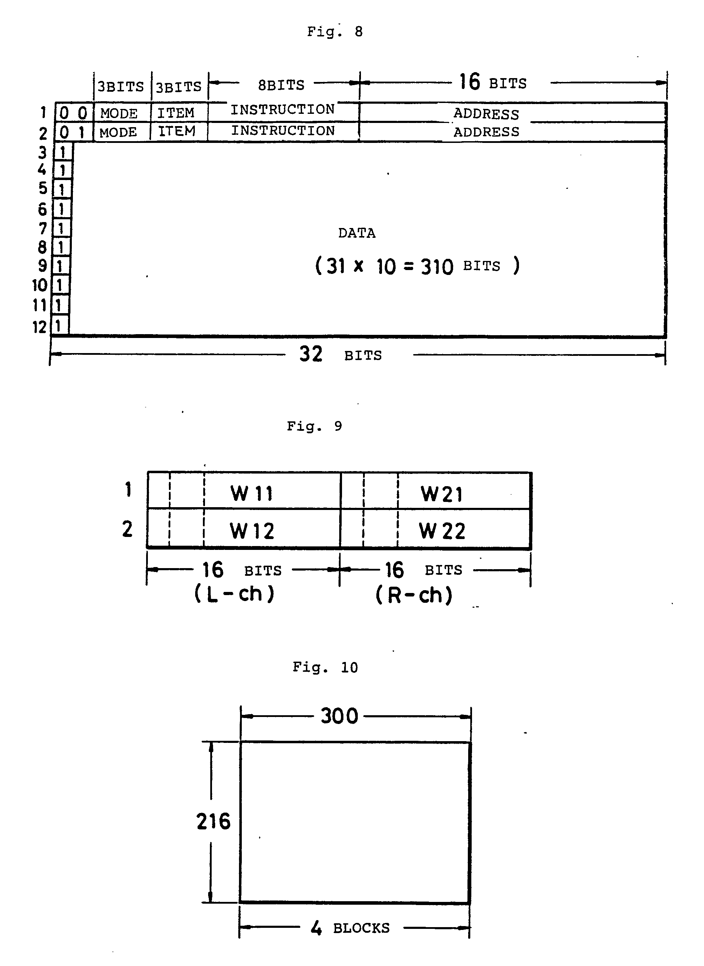

As shown in Figure 8, one block of the digital data is constituted by twelve lines ($32 \times 12 = 384$ bits) each of which consists of 32 bits. As mentioned above, data of ($16 \times 6 \times 2 = 192$ bits) are inserted in one frame of the recording signal on the compact disc. Therefore, one block of the digital data is the data corresponding to two frames. The data of one block are sequentially supplied from the above-mentioned error correction encoders 8 and 10 and the interleave circuit 9 in accordance with the sequence first line, second line, third line, . . ., twelfth line, and the output is recorded on the compact disc in the format shown in Figures 1 and 2.

The first two bits of the first line are set to 0 0, the first two bits of the second line are set to 0 1, and the first bit of each line from the third line to the twelfth line is set to 1. In this way, since the first bit of each of the first and second lines of one block is set to 0, the limits of one block is indicated. The first two bits of the first and second lines are different from those of the other lines to distinguish the first and second lines. In addition, the control data and address data are arranged in the first and second lines of one block.

The control data consists of a 3-bit mode, a 3-bit item and an 8-bit instruction. The remaining 16 bits are the address data. These numbers of bits are given only as an example. The mode is used to designate one of the four modes; graphic mode, still picture mode, audio mode, and data mode. The item is used to designate a further detailed mode within this mode. For instance, in the graphic mode, the full graphic mode and the font mode are distinguished, or the difference in the number of quantization bits (10 or 12) in the audio mode is distinguished. The instruction is the command in each mode. The address data represent the addresses (column address and row address) or the page information of the data in the block on the display region in the graphic or still picture mode.

These control data and address data are more significant data than the other data in a block. Thus, even if only one bit of the mode is different, a different mode will have been designated, so for example, data in the graphic mode may be erroneously processed as audio data and supplied to the loudspeaker 54. Therefore, the same data as the control data and address data of the first line are inserted in the second line, so it is written twice. With such double writing, if error data are rejected and only correct data are used on the reproducing side, then in most cases, the correct control and address data are used.

In a compact disc, the very effective error correction coding using the cross interleave and Reed Solomon codes is used. Particularly, as shown in Figure 3A, the even/odd interleave is carried out for each channel. Therefore, in the ordinary state where the compact disc does not have a large flaw, three successive words (each of 16 bits) are most likely to be uncorrectable error words. The correct control data and address data can be obtained on the reproducing side by use of this property. In the separating circuit 40 in Figure 7, the processing for separating the correct control data and address data is executed. For this purpose, although not shown, an error flag indicative of the presence or absence of error on the word unit basis is supplied to the separating circuit 40 from the player 31.

Now, when only the portions of the first and second lines of one block are taken out, as shown in Figure 9, they can be expressed as words $W_{11}$, $W_{21}$, $W_{12}$ and $W_{22}$ each consisting of 16 bits. The words $W_{11}$ and $W_{12}$ each of which includes the bits representing the limits of the block, mode and item have mutually the same bit pattern when no error is detected. Similarly, the words $W_{21}$ and $W_{22}$ consisting of the address data have mutually the same bit pattern when no error is detected. As mentioned above, since the reproduced data of the player 31 ordinarily do not include three successive error words, two words including no error can be derived by selecting either word $W_{11}$ or $W_{12}$ and either word $W_{21}$ or $W_{22}$.

First, in the case where all of the words are correct, where one of $W_{12}$ and $W_{22}$ is an error word, or where both $W_{12}$ and $W_{22}$ are error words, the two words $W_{11}$ and $W_{21}$ are supplied from the separating circuit 40.

Where $W_{11}$ is an error word, $W_{12}$ and $W_{21}$ are supplied from the separating circuit 40. Where $W_{21}$ is an error word $W_{11}$ and $W_{22}$ are supplied from the separating circuit 40. In this way, error-free control data and address data can usually be obtained from the separating circuit 40.

In addition, the sum of the data of ten lines from the third to twelfth lines in one block excluding the first one bit of each line is ($31\times10=310$ bits). The data arrangement of these 310 bits differs in dependence upon the operating mode.

The first mode is determined to be the graphic mode, and three bits for a command are set to 0 0 1. This graphic mode includes the full graphic mode and font mode and each are different depending upon the item. In the full graphic mode in which three bits for the item are 0 0 1, the memory region corresponding to the display region has a size in which the longitudinal length is 216 lines and the transverse length is 300 pixels as shown in Figure 10, and the total number of pixels is ($300\times216=64800$ pixels).

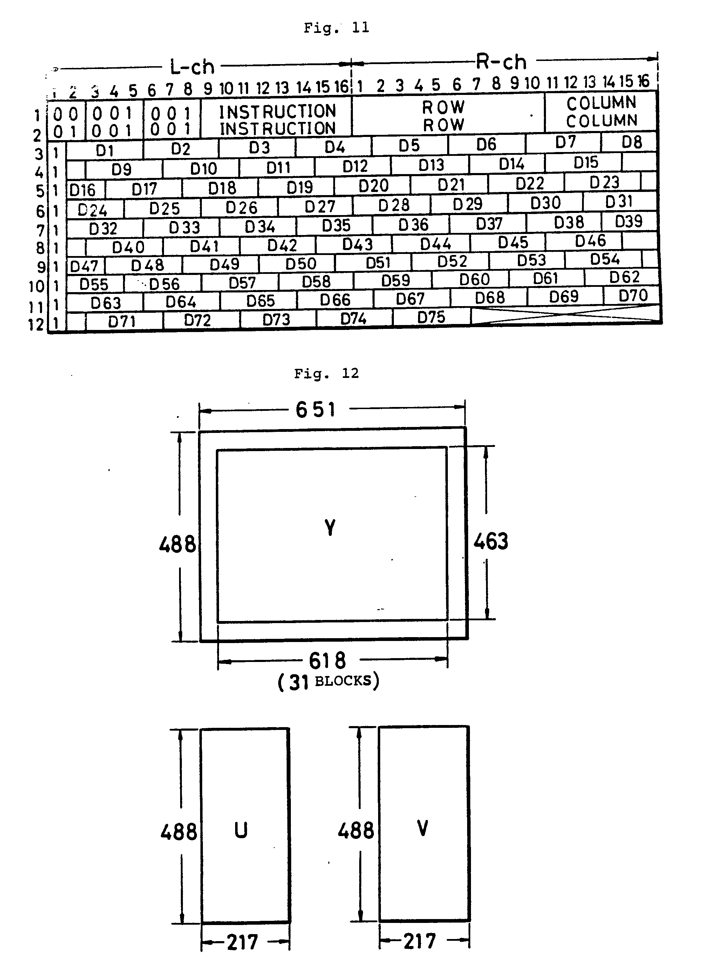

One pixel, that is, one dot, consists of four bits, and these four bits become the read address input to a predetermined colour look-up table. In the graphic mode, the data constituting this colour look-up table are also reproduced. In the case of the graphic mode, one block is constituted as shown in Figure 11 which shows the case of the full graphic mode, in which the three bits for the item are set to 0 0 1. The address data consist of the horizontal 10-bit column address and the vertical 6-bit row address. As mentioned above, the data of the first and second lines excluding the first two bits are the data which were written twice.

Seventy-five dot data $D_1$ to $D_{75}$ each consisting of four bits excluding the first bit are arranged in the third to twelfth lines in one block. Therefore, one line in the full graphic mode is constituted by the data of four blocks and the whole region consists of ($4\times216=864$ blocks). Eventually, 10-bit data blank occurs in one block. Since the block frequency of the data reproduced from the compact disc is 3.675 kHz, it takes 0.235 sec to reproduce one picture in the graphic mode.

In the graphic mode and the still picture mode, and the audio mode which will be mentioned later, the control data and address data in the first and second lines are written twice, but the data region of 310 bits is not written twice, to avoid increase of the transmission time. In the data mode, since the significance of the data is large, not only the control data and address data, but also the data are written twice.

In the still picture mode, a still colour picture is formed by colour components of luminance data Y and colour difference data U and V.

As shown in Figure 12, the memory region of the frame memory 49 is constituted by 488 lines and each line consists of 651 pixels. One pixel consists of eight bits and the frame memory 49 has eight bits in the direction of depth. All of the luminance data Y are written in this memory region. On the other hand, with regard to the colour different data U and V, the data of one sample are commonly used for three pixels. As shown in Figure 12, each of the colour difference data U and V has (217 pixels$\times$488 lines) per frame. Therefore, three pixels are formed by a total of five bytes consisting of the luminance data Y of three bytes and the colour difference data U and V each of which consists of one byte.

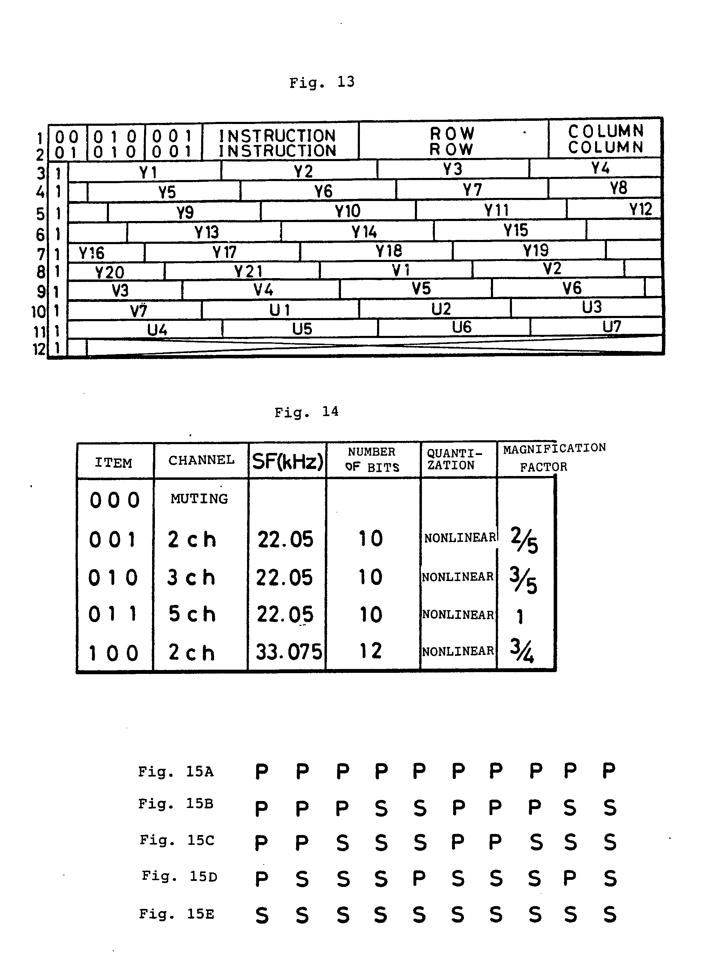

In addition to the Y—U—V method, the R—G—B method and the monochrome still picture mode are included in this still picture mode, and they are distinguished by the item. As shown in Figure 13, in the still picture mode by the Y—U—V method, three bits for the mode are set to 0 1 0 and three bits for the item are set to 0 0 1. The instruction and address data are also inserted similarly to the case of the graphic mode. The luminance data $Y_1$ to $Y_{21}$ o 21 samples each consisting of one byte are inserted sequentially from the second bit of the third line. Thereafter, the colour difference data $V_1$ to $V_7$ of seven samples are inserted. Further, thereafter, the other colour difference data $U_1$ to $U_7$ of seven samples are inserted. The luminance data of three samples, for example, $Y_1$, $Y_2$ and $Y_3$ and the colour difference data of one sample, for example $U_1$ and $V_1$ are combined to form the data of one pixel. Therefore, the data of 21 pixels (=35 bytes=280 bits) are inserted in one block. Eventually, data blanking of 30 bits exists in one block. In addition, one line in the memory region of the frame memory 49 consists of 31 blocks. In the graphic mode and the still picture mode, the number of bits of the address data can be reduced by setting the number of pixels of one line to an integral times the number of blocks. In the still picture mode, it takes $31\times488/3675=4.116$ sec to produce one picture.

The audio mode will now be explained. In the audio mode, three bits for the mode are set to 0 1 1. In addition, as shown in Figure 14, the audio mode includes more detailed operating modes which are distinguished by the three bits for the item. In the case of an item 0 0 0, for example, the operation of the amplifier 53 is turned off and the voice path is muted.

The items 0 0 1, 0 1 0 and 0 1 1 denote that the sampling frequency SF is 22.05 kHz, each sample is ten bits, and audio data which has been non-linearly quantized has been recorded. On the other hand, a magnification factor in Figure 14 represents the ratio between the audio data and the image data (still picture data or graphic data).

As shown in Figure 15A, the magnification factor when only the image data is present is 0. As shown in Figure 15B, the magnification factor is 2/5 in the case where three of the five successive blocks are the image data (P) and the other two are the audio data (S) in the audio mode. As shown in Figure 15C, the magnification factor is 3/5 in the case where two of the five successive blocks are the image data and the mther three are the audio data. As shown in Figure 15D, the magnification factor is 3/4 in the case where one block of the four successive blocks is the image data and the other three are the audio data. Further, as shown in Figure 15E, a magnification factor is 1 in the case where all the blocks are audio data.

The reason why the image data and the audio data are mixed in this way, is to enable the voice information to keep pace with the reproduction of the image information. As a magnification factor increases, it takes a longer time to reproduce one still picture. This makes it possible to select a suitable magnification factor in accordance with the amounts of image information and audio information.

In the case of the item 0 0 1, the magnification factor is 2/5 in two channels. In the case of the item 0 1 0, the magnification factor is 3/5 in three channels. In the case of the item 0 1 1, the magnification factor is 1 in five channels. When recording a stereo music signal on a compact disc, the sampling frequency SF is set to 44.1 kHz, the number of channels is two, one sample consists of 16 bits, and the linear quantization is used. In comparison with a stereo music signal, the reproduced sound in the audio mode is deteriorated in quality in terms of the dynamic range and frequency response. However, the audio mode is provided, for example, for explanation of a still picture, where this deterioration will not cause a problem. Also since the number of channels can be increased, there is the advantage that it is possible to explain in a plurality of different languages.

On the other hand, when transmitting an audio signal of relatively high quality in the audio mode, another mode with the item set to 1 0 0 is provided, for example, for music. Then, the number of channels is two, the sampling frequency is 33.075 kHz, one sample consists of 12 bits, non-linear quantization is used, and the magnification factor is 3/4. In this operating mode, it is possible to reproduce the audio information with a quality approaching that of the above-mentioned stereo music signal.

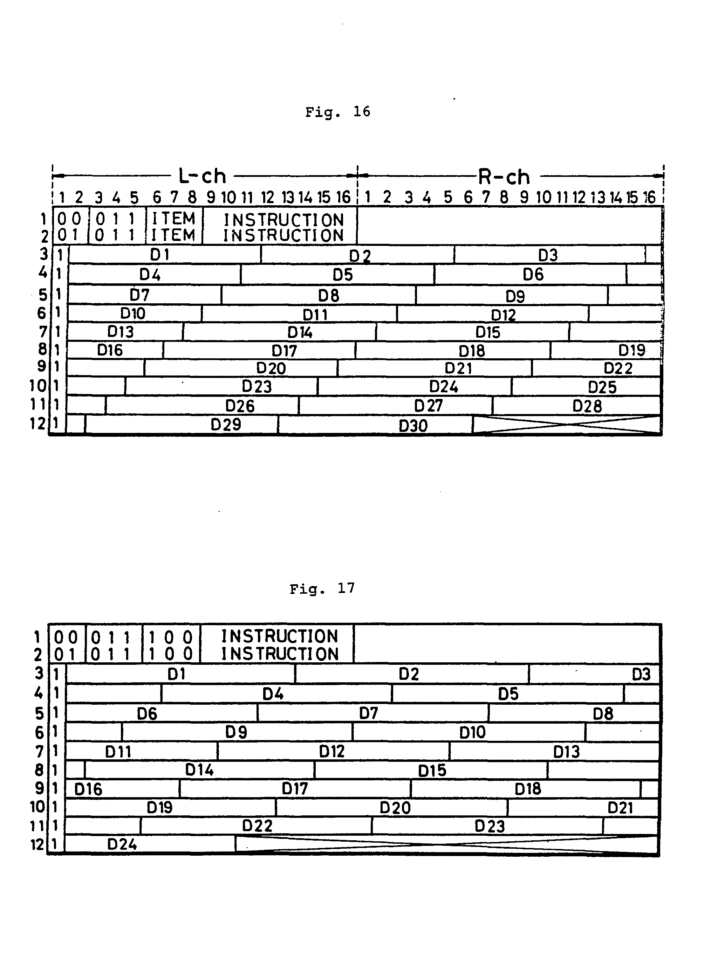

Figure 16 shows a data arrangement of one block in the cases where the item are 0 0 1, 0 1 0 and 0 1 1 in the audio mode. The address data are unnecessary in the audio mode, and this section becomes the data blank or is used as the portion for necessary control data. The data $D_1$ to $D_{30}$ of each sample which consists of ten bits are sequentially arranged in the data region excluding the first bit of each line of one block. Therefore, 300 bits of data are inserted in one block, and the remaining ten bits are set to the data blank. In the case of two channels and the item 0 0 1, $D_{2n-1}$ is the A-channel data and $D_{2n}$ is the B-channel data. In the case of three channels and the item 0 1 0, $D_{3n-2}$ is the A-channel data, $D_{3n-1}$ is the B-channel data, and $D_{3n}$ is the C-channel data. In the case of five channels and the item 0 1 1, $D_{5n-1}$ is the A-channel data, $D_{5n-2}$ is the B-channel data, $D_{5n-3}$ is the C-channel data, $D_{5n-4}$ is the D-channel data, $D_{5n}$ is the E-channel data.

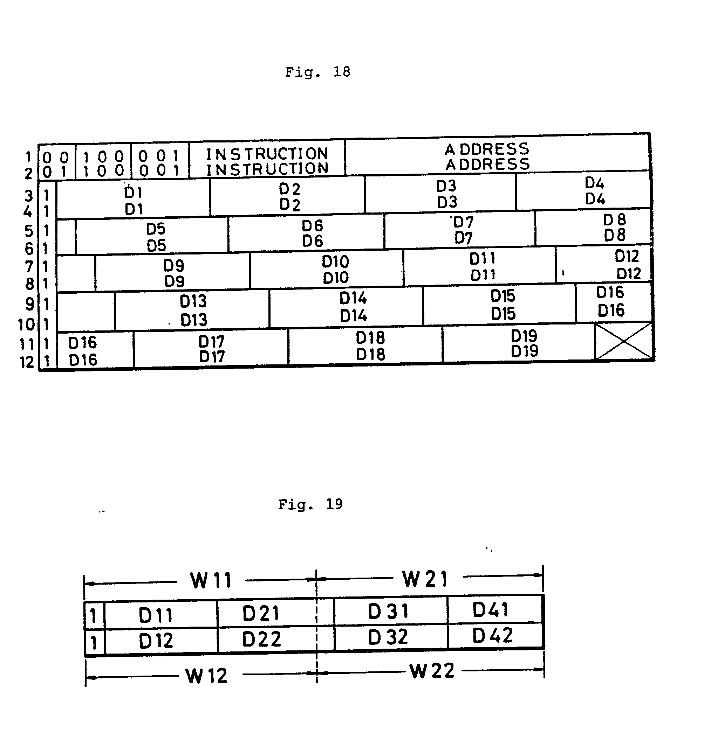

In addition, in the case of the item 1 0 0, since the number of bits of one sample is twelve, a data arrangement of one block is as shown in Figure 17. Namely, the data $D_1$ to $D_{24}$, each sample of which consists of 12 bits are sequentially arranged. $D_{2n-1}$ are the A-channel data and $D_{2n}$ are the B-channel data. Thus, $(24 \times 12 = 288$ bits) are inserted in one block.

In each operating mode of the above audio mode, sufficient audio data can be inserted in one block even in the case where a magnification factor is other than 1, and the audio data exists intermittently in the reproduced data.

In the data mode, the three bits for the mode are set to 1 0 0. In the data mode, the case where the three bits for the item are 0 0 1 corresponds to the double writing mode.

Figure 18 shows a data arrangement of one block in the double writing mode. Ten lines from the 3rd to 12th lines of one block are divided into five sets each consisting of two lines, and the recording is done such that the same data are located on two lines of each set. These data consist of eight bits, and the nineteen data of $D_1$ to $D_{19}$ $(8 \times 19 \times 2 = 304$ bits) are inserted in one block, where six bits are set to the data blank.

By writing twice, error-free data can be obtained similarly to the above-mentioned control data and address data. As an example, the case where the data $D_2$ are derived from the third and fourth lines in which the data $D_1$, $D_2$, $D_3$ and $D_4$ are included will be explained.

As shown in Figure 19, the data of which those four data were written twice are expressed by $(D_{11}, D_{12})$, $(D_{21}, D_{22})$, $(D_{31}, D_{32})$ and $(D_{41}, D_{42})$, respectively. In addition, for the reproduced data of an ordinary compact disc, three successive words, for example, $W_{11}$, $W_{21}$ and $W_{12}$ are not generally in error. The use of this property

enables the data $D_2$ with no error to be derived as described below.

In cases where the word $W_{11}$ is the error word, where the word $W_{21}$ is the error word, and where the words $W_{11}$ and $W_{21}$ are the error words, the data $D_{22}$ are derived from the words $W_{12}$ and $W_{22}$.

In the case where the words $W_{21}$ and $W_{12}$ are the error words, seven bits of the data $D_{21}$ included in the word $W_{11}$ and one bit of the data $D_{22}$ included in the word $W_{22}$ are derived as the data $D_2$.

In the cases where the word $W_{12}$ or $W_{22}$ is the error word and where the words $W_{12}$ and $W_{22}$ are the error words, the data $D_{21}$ are derived from the words $W_{11}$ and $W_{21}$.

The processing for deriving the above data without an error is performed by the controller 41. Although not shown, an error flag on the word unit basis from the player 31 is supplied to the controller 41 and is used for this processing.

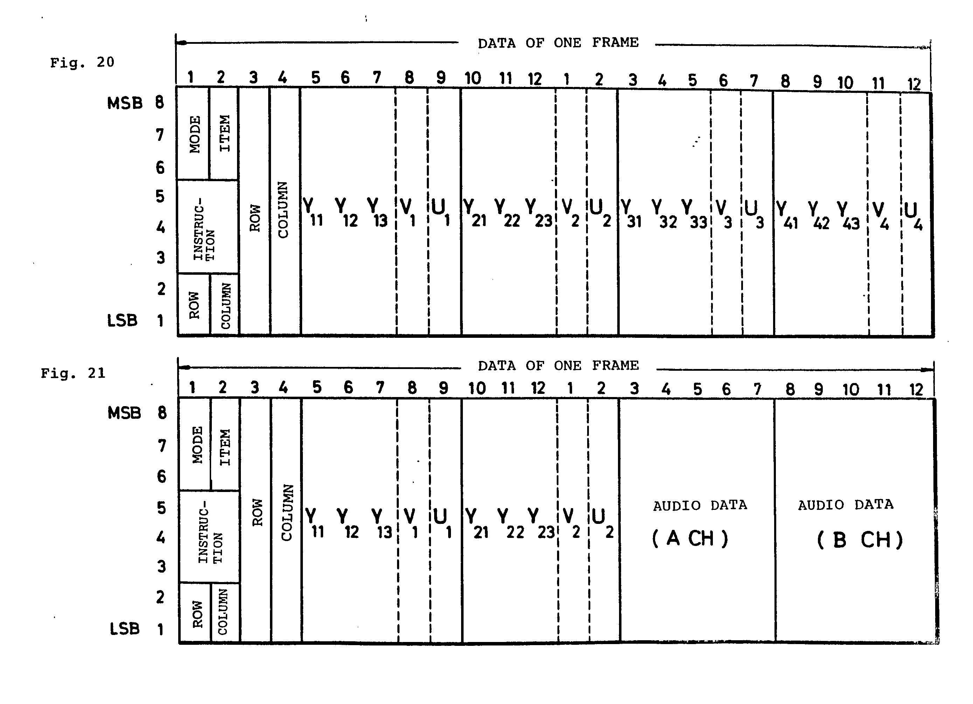

Figures 20, 21, 22 and 23 show other arrangements of one block of digital data. In this example, three modes are used for the digital data. The first mode consists of only colour still picture data. The second mode consists of colour still picture data and two-channel audio data. The third mode consists of colour still picture data and three-channel audio data. The fourth mode consists of colour still picture data and five-channel audio data. Figure 20 shows a data arrangement of one block in the first mode. A unit of data consists of eight bits and $(12 \times 2 = 24)$ data exist in one block. Four data at the edge portion in Figure 20 are the control data and address data. The control data consists of three bits for mode, three bits for the item and six bits for the instruction. The mode serves to distinguish the graphic mode, still picture mode and the like. The item serves to designate a further detailed mode within this mode. This is in the still picture mode and the foregoing first to fourth modes are distinguished by the item. The instruction is the command in each mode. On the other hand, the address data consists of row and column each of ten bits representing the respective vertical and horizontal addresses of the display region. In the first mode, the other twenty data in one block are the still picture data. In this example, the image data formed by coding the components consisting of the luminance data Y and two colour difference data V and U are used. In addition, the ratio is such that the colour difference data of one sample are used for the luminance data of three samples. In the first mode, the luminance data $Y_{11}$, $Y_{12}$, $Y_{13}$, ..., $Y_{42}$ and $Y_{43}$ of twelve samples and the colour difference data $V_1$ to $V_4$ and $U_1$ to $U_4$ of each sample are inserted in one block.

As an example, it is assumed that the number of vertical pixels necessary to display one still picture is 576 and the number of horizontal pixels is 612, so the total number of pixels is

$$576 \times 612 = 352512.$$

Since a compact disc can reproduce 7350 frames per second, it takes:

$$\frac{352512}{7350 \times 3 \times 4} = 3.997 \text{ sec}$$

to reproduce the data of one still picture.

In the second mode, as shown in Figure 21, the control data and address data similar to those mentioned above are inserted in one block, while the colour still picture data of two pixels and the audio data in two channels of A and B are inserted therein. The audio data of five samples per channel of which one sample consists of eight bits are inserted. In an ordinary compact disc, the sampling frequency is 44.1 kHz, and six samples are inserted in one frame, so that the reduction ratio of the number of samples is 5/6. When it is assumed that the transmission band is 1/2.2 of the sampling frequency, the transmission band of the audio signal in the second mode will be:

$$44.1 \times \frac{5}{6} \times \frac{1}{2.2} = 16.7 \text{ kHz}$$

In addition, the time necessary to reproduce the data of one still picture is twice that in the first mode and the number of pictures which can be recorded on a compact disc is halved.

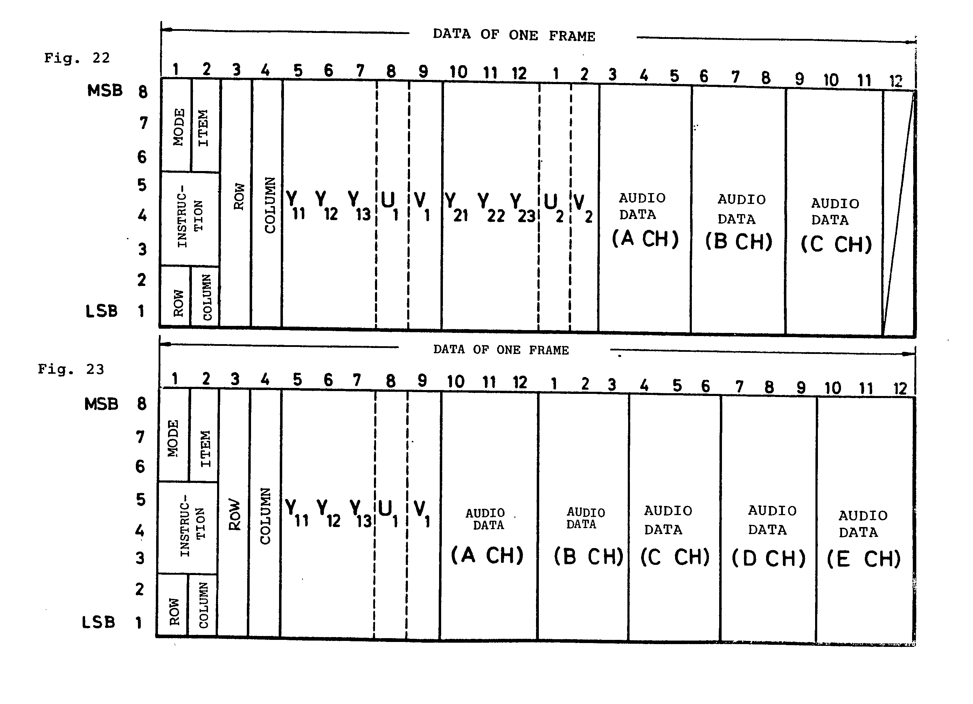

In the third mode, as shown in Figure 22, the control data and address data similar to those mentioned above are inserted, and the colour still picture data of two pixels and the audio data in three channels A, B and C are inserted. The audio data are inserted in one block at the ratio of three samples per channel. The reproducing time of the data of one still picture is the same as that in the second mode. In the third mode, the data in one block becomes excess data.

In the fourth mode, as shown in Figure 23, control data and address data similar to those mentioned above are inserted, and the colour still picture data of one pixel and the audio data of five channels A, B, C, D and E are inserted. The audio data are inserted in one block at the ratio of three samples per channel.

In the third and fourth modes, since the number of samples in one channel is reduced to half of that of an ordinary compact disc, the transmission band of the audio signal will have decreased to 10.02 kHz. Therefore, the sampling frequency of each of the audio data in the third and fourth modes is increased by 1.5 times. This makes it possible to expand the transmission band of the audio data to:

$$44.1 \times \frac{3}{6} \times 1.5 \times \frac{1}{2.2} = 15.03 \text{ kHz}$$

In addition, to increase the sampling frequency by 1.5, the linear velocity of the compact disc upon reproduction is also increased by 1.5. Since an ordinary compact disc is rotated at a constant linear velocity of 1.25 m/sec, the linear velocity is set to 1.875 m/sec in the third and fourth modes.

In this way, by increasing the linear velocity upon reproduction by 1.5, the reproducing time of the data of one still picture is shortened to 5.33 sec (in the third mode) and 10.66 sec (in the fourth mode). The number of still pictures which can be recorded on one compact disc is not reduced. Although the reproducing time is shortened to 40 minutes from 60 minutes from an ordinary compact disc, this will not cause problems in practice.

On the other hand, to make the transmission band of the audio data equal to that (20 kHz) of an ordinary compact disc, it is necessary to increase the linear velocity by 1.2 in the second mode and to increase the linear velocity by two in the third mode.

To identify the above-mentioned difference in linear velocity upon reproduction, control data are recorded on the compact disc.

Since the table of contents (TOC) data are recorded at the location of the innermost tract of the compact disc, the identification data are inserted in the control bits of this portion or in the control bits of the sub-coding signal (Q channel). The control bits consist of four bits and are defined as follows for the existing compact disc:

0 0 0 0: Two-channel audio data to which no pre-emphasis is applied
1 0 0 0: Four-channel audio data to which no pre-emphasis is applied
0 0 0 1: Two-channel audio data to which pre-emphasis is applied
1 0 0 1: Four-channel audio data to which pre-emphasis is applied

The following definition is added as the meanings of the control bits:

0 0 1 0: Same speed playback
0 1 0 0: Double speed playback
0 1 1 0: 1.2 speed playback

This corresponds to the case of enlarging the transmission band of the audio data to 20 kHz. The use of these control bits makes it possible to distinguish a compact disc on which two-channel stereo audio signals are recorded as in an ordinary compact disc, and a compact disc on which digital data including image data are recorded.

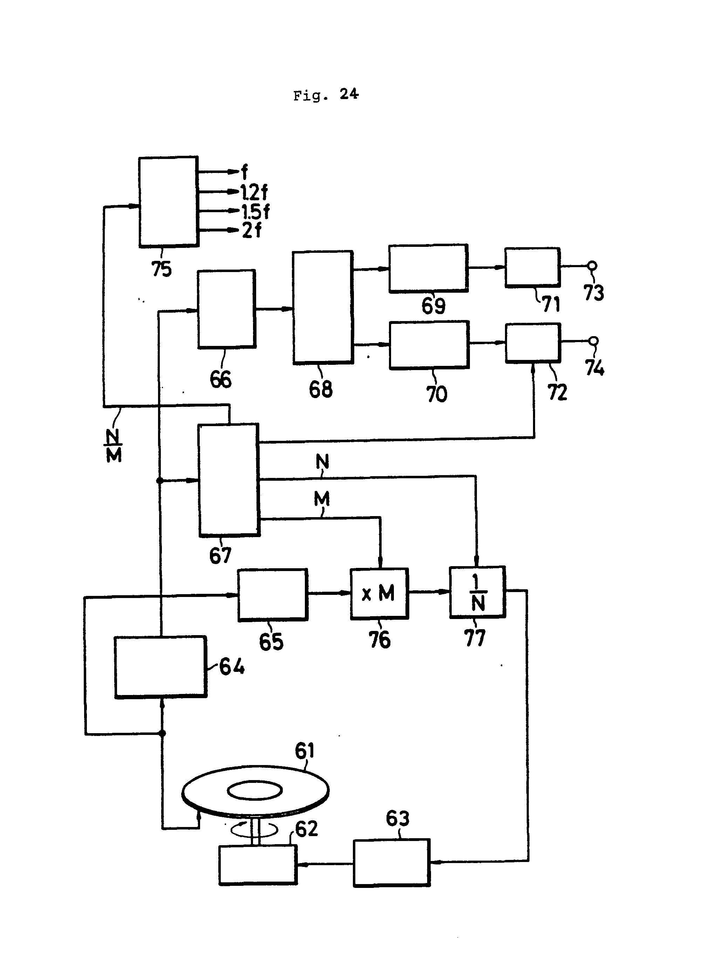

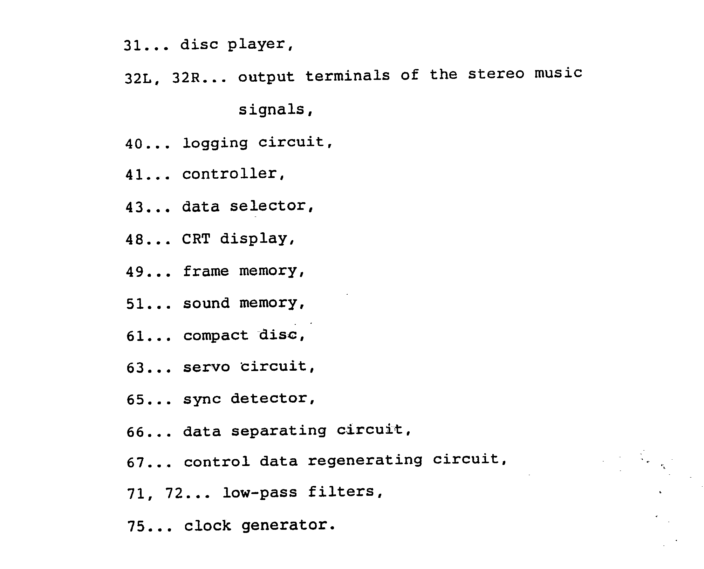

An apparatus shown in Figure 24 comprises a compact disc 61 and a motor 62 for rotating the compact disc 61. The signals reproduced from the compact disc 61 by an optical pick-up (not shown) are supplied to a reproducing processor 64 and a sync detector 65.

The reproducing processor 64 includes an RF amplifier, a bit clock regenerating circuit, an EFM demodulator, and an error correcting circuit. The reproduced data obtained at the output of the processor 64. The sync detector 65 detects a frame sync pulse. The reproduced data from the reproducing processor 64 are supplied to a data separating circuit 66 and a control data regenerating circuit 67. The control data regenerating circuit 67 generates predetermined change-over signals from the data for designating the linear velocity of the compact disc upon reproduction, and the control data (mode and item) added to the digital data.

The data separating circuit 66 separates the digital data and these separated digital data are supplied to a data distributing circuit 68, where they are divided into the video data and the audio data. The video data and audio data from the data distributing circuit 68 are supplied to an image reproducing circuit 69 and an audio reproducing circuit 70, respectively. The image reproducing circuit 69 includes a frame memory for storing the video data, and a D/A converter. The analogue colour video signal appearing at the output of the circuit 69 is supplied to an output terminal 73 through a low-pass filter 71. The audio reproducing circuit 70 includes a memory and a D/A converter. The analogue audio signal appearing at the output of the circuit 70 is supplied to an output terminal 74 through a low-pass filter 72. Although not shown, an image reproducing apparatus and an audio reproducing apparatus are connected to the output terminals 73 and 74, respectively. The pass band of the low-pass filter 72 can be switched to any one of a plurality of pass bands.

Also, a clock generator 75 for generating a clock pulse signal which is used for data processing in each circuit of the reproducing system is provided. Further, a servo circuit 63 is provided in association with the motor 62 for rotating the compact disc 61. The output signal of the sync detector 65 is supplied to the servo circuit 63 through a multiplier 76 for multiplying the frequency of the output signal by M, and a 1/N frequency divider 77.

The control data regenerating circuit 67 generates a change-over signal for switching the pass band of the low-pass filter 72, a changeover signal for changing the frequency of the clock pulse signal formed by the clock generator 75 at the ratio of N/M, a change-over signal for setting a coefficient M of the frequency multiplier 76, and a changeover signal for setting a coefficient N of the frequency divider 77. In the case where the control data included in the reproduced data instruct the same speed playback, $M=N=1$ are set. Due to this, a clock pulse signal having a frequency of f is generated from the clock generator 75, and the pass band of the low-pass filter 72 is set to 20 kHz. The signal having the frame frequency from the sync detector 65 is supplied to the servo circuit 63. A typical example of this same speed playback corresponds to the case of playing back a compact disc on which stereo music signals have been recorded.

In addition, when the control data instruct the 1.2 speed playback, $M=5$, $N=6$ are set. At this time, a clock pulse signal having a frequency of 1.2f is generated from the clock generator 75 and the frequency of the signal supplied to the servo circuit 63 is reduced to 5/6. Since the servo circuit 63 controls the rotating speed of the motor 62 such that the frequency of the signal supplied from the frequency divider 77 is equal to the frame frequency, the linear velocity of the compact disc is increased by 1.2. The pass band of the low-pass filter 72 differs in dependence upon the mode the reproduced digital data belong to. In the case of digital data in the second mode, the pass band of the low-pass filter 72 is set to 20 kHz. In case of digital data in the third to fourth mode, the pass band is set to 12 kHz.

When the control data instruct the 1.5 speed or double speed playback, the compact disc 61 is rotated at the instructed linear velocity and the frequency of the clock pulse and the pass band of the low-pass filter 72 are changed to be suitable for the reproduced data.

Thus, when both video and audio data are recorded on the disc, it is possible to prevent the reduction in the audio signal band in association with a decrease in the number of samples of the audio data. In addition, a plurality of audio channels can be provided, thereby enabling voice information in a plurality of languages to be recorded. For example, explanation of pictures of a traveller's guide can be made in a plurality of languages.

This invention is not limited to an optical disc but can be also applied to a disc on which a digital signal is recorded as a change in electrostatic capacity, or the like.

With methods in accordance with the present invention using a disc such as a commercially available compact disc, it is possible to record digital data other than stereo music signals while keeping consistency of the signal format and signal processing such as the error correcting method, the format of the recording data, etc. Therefore, by adding a data processing section such as a microcomputer, a colour CRT, and a loudspeaker to an existing disc player, various video and audio information can be reproduced, thereby enabling the application range of the disc to be enlarged.

## Claims

1. A method of data recording using a digital disc, wherein even-numbered designated and odd-numbered designated data words are interleaved and are recorded on said disc as signal tracks in the circumferential direction for subsequent reproduction;
said data being recorded in blocks each comprising a plurality of frames;
characterized in that:
each said block comprises digital data and control data which are used for controlling the processing of said digital data, said control data being recorded at least twice at a predetermined interval in each said block; and
said digital data comprise different forms of data such as digitally encoded audio signals selectively having different sampling frequencies or different numbers of quantization bits, and digital data such as display data and programme data, a code signal indicating the form of said data being recorded in every said frame.

2. A method according to claim 1 wherein said code signal is recorded twice in every said frame.

3. A method according to claim 1 or claim 2 wherein control data indicative of the linear velocity of said digital disc upon reproduction are recorded together with said digital data which comprise audio data and video data, and on reproduction said digital disc is rotated at said linear velocity specified by said control data, a clock signal having a frequency corresponding to the transmission rate of the reproduced data is supplied to a reproducing circuit, and reproduced said audio data from said reproducing circuit are digital-to-analogue converted.

## Patentansprüche

1. Verfahren zur Datenaufzeichnung unter Verwendung einer Digitalplatte, bei dem ungeradzahlige Datenwörter und geradzahlige Datenwörter ineinander verschachtelt und für die anschließende Wiedergabe in Signalspuren aufgezeichnet werden, die in Umfangsrichtung der Platte verlaufen, wobei
die Daten in Blöcken aufgezeichnet werden, die jeweils mehrere Rahmen umfassen,
dadurch gekennzeichnet,
daß jeder Block digitale Daten enthält sowie zur Steuerung der Verarbeitung dieser digitalen Daten verwendete Steuerdaten, wobei diese Steuerdaten in einem vorbestimmten Intervall wenigstens zweimal in jedem Block aufgezeichnet werden, und daß die digitalen Daten unterschiedliche Formen von Daten umfassen, wie beispielsweise digital kodierte Audiosignale mit wahlweise unterschiedlichen Abtastfrequenzen oder unterschiedlichen Quantisierungsbitzahlen, und digitale Daten, wie beispielsweise Displaydaten und Programmdaten, wobei ein Kodesignal, das die Form der Daten angibt, in den einzelnen Rahmen aufgezeichnet ist.

2. Verfahren nach Anspruch 1, wobei das Kodesignal in jedem Rahmen zweimal aufgezeichnet wird.

3. Verfahren nach Anspruch 1 oder 2, bei dem zusammen mit den digitalen Daten, die Audiodaten und Videodaten enthaltend, Steuerdaten aufgezeichnet werden, die die Lineargeschwindigkeit der Digitalplatte bei der Wiedergabe angeben, und bei dem die Digitalplatte bei der Wiedergabe mit der durch diese Steuerdaten spezifizierten Lineargeschwindigkeit gedreht wird, wobei ein Taktsignal mit einer der Übertragungsgeschwindigkeit der wiedergegebenen Daten entsprechenden Frequenz einer Wiedergabeschaltung zugeführt wird und die von dieser Wiedergabeschaltung wiedergegebenen Audiodaten einer Digital-Analog-Wandlung unterzogen werden.

**Revendications**

1. Procédé d'enregistrement de données à l'aide d'un disque numérique, où des mots de données à numérotation paire et à numérotation impaire sont entrelacés et sont enregistrés sur ledit disque sous forme de pistes de signaux suivant la direction circonférentielle en vue d'une reproduction ultérieure;

lesdites données étant enregistrées en blocs qui comprennent chacune plusieurs trames;

caractérisé en ce que:

chaque dit bloc comprend des données numériques et des données de commande qui sont utilisées pour commander le traitement desdites données numériques, lesdites données de commande étant enregistrées au moins deux fois avec un intervalle prédéterminé dans chaque dit bloc; et

lesdites données numériques comprennent des formes différentes de données telles que des signaux audio codés numériquement possédant sélectivement des fréquences d'échantillonnage différentes ou des nombres différents de bits de quantification, et des données numériques telles que des données d'affichage et des données de programme, un signal de code qui indique la forme desdites données étant enregistré dans chaque dite trame.

2. Procédé selon la revendication 1, où ledit signal de code est enregistré deux fois dans chaque dite trame.

3. Procédé selon la revendication 1 ou 2, où des données de commande qui indiquent la vitesse linéaire dudit disque numérique lors de la reproduction sont enregistrées en même temps que lesdites données numériques qui comprennent des données audio et des données vidéo, et, au moment de la reproduction, ledit disque numérique est entraîné en rotation à ladite vitesse linéaire qui est spécifiée par lesdites données de commande, un signal d'horloge possédant une fréquence qui correspondant au taux de transmission des données reproduites est fourni à un circuit de reproduction, et lesdites données audio reproduites venant dudit circuit de reproduction subissent une conversion numérique-analogique.

Fig. 1

1 FRAME (588 bits)

DB (14 bits)    RB    DB

30 31 32 F S 0 1 2 3 ----- 12 13 14 15 16 17 18 19 ----- 28 29 30 31 32 F S 0 1 2 3 --

(24 bits)

RB (3 bits)

CONTROL DISPLAY

AUDIO DATA    PARITY    AUDIO DATA    PARITY

FIg. 2

| 1 BLOCK | | DB (0) | DB (1~32) |
|---|---|---|---|
| 0th FRAME | F S | SYNC PATTERN | DATA (6 SAMPLES x 2 CHANNELS) |
| 1st FRAME | F S | SYNC PATTERN | DATA (6 SAMPLES x 2 CHANNELS) |
| 2nd FRAME | F S | P Q R S T U V W | DATA (6 SAMPLES x 2 CHANNELS) |
| 3rd FRAME | F S | P Q R S T U V W | DATA (6 SAMPLES x 2 CHANNELS) |
| 97th FRAME | F S | P Q R S T U V W | DATA (6 SAMPLES x 2 CHANNELS) |

CHANNEL

24 bits    8 bits    16 x 6 x 2 bits

EP 0 137 855 B1

EP 0 137 855 B1

Fig. 3A

2

Fig. 3B

| Box | Output |
|-----|--------|
| | W12n-12,A |
| 1D | W12n-12(1D+2),B |
| 2D | W12n+1-12(2D+1),A |
| 3D | W12n+1-12(3D+2),B |
| 4D | W12n+4-12(4D+1),A |
| 5D | W12n+4-12(5D+2),B |
| 6D | W12n+5-12(6D+1),A |
| 7D | W12n+5-12(7D+2),B |
| 8D | W12n+8-12(8D+1),A |
| 9D | W12n+8-12(9D+2),B |
| 10D | W12n+9-12(10D+1),A |
| 11D | W12n+9-12(11D+2),B |
| 12D | Q12n-12(12D) |
| 13D | Q12n+1-12(13D+1) |
| 14D | Q12n+2-12(14D) |
| 15D | Q12n+3-12(15D+1) |
| 16D | W12n+2-12(16D),A |
| 17D | W12n+2-12(17D+1),B |
| 18D | W12n+3-12(18D),A |
| 19D | W12n+3-12(19D+1),B |
| 20D | W12n+6-12(20D),A |
| 21D | W12n+6-12(21D+1),B |
| 22D | W12n+7-12(22D),A |
| 23D | W12n+7-12(23D+1),B |
| 24D | W12n+10-12(24D),A |
| 25D | W12n+10-12(25D+1),B |
| 26D | W12n+11-12(26D),A |
| 27D | W12n+11-12(27D+1),B |

P 12n — $\overline{P_{12n}}$
P 12n+1 — $\overline{P_{12n+1-12}}$
P 12n+2 — $\overline{P_{12n+2}}$
P 12n+3 — $\overline{P_{12n+3-12}}$

9
10
11
12
13
14
15

3

Fig. 4A

Fig. 4B

$W_{12n-12(27D+2),A}$

$W_{12n-12(27D+2),B}$

$W_{12n+1-12(27D+2),A}$

$W_{12n+1-12(27D+2),B}$

$W_{12n+2-12(27D+2),A}$

$W_{12n+2-12(27D+2),B}$

$W_{12n+3-12(27D+2),A}$

$W_{12n+3-12(27D+2),B}$

$W_{12n+4-12(27D+2),A}$

$W_{12n+4-12(27D+2),B}$

$W_{12n+5-12(27D+2),A}$

$W_{12n+5-12(27D+2),B}$

$W_{12n+6-12(27D+2),A}$

$W_{12n+6-12(27D+2),B}$

$W_{12n+7-12(27D+2),A}$

$W_{12n+7-12(27D+2),B}$

$W_{12n+8-12(27D+2),A}$

$W_{12n+8-12(27D+2),B}$

$W_{12n+9-12(27D+2),A}$

$W_{12n+9-12(27D+2),B}$

$W_{12n+10-12(27D+2),A}$

$W_{12n+10-12(27D+2),B}$

$W_{12n+11-12(27D+2),A}$

$W_{12n+11-12(27D+2),B}$

HC2

22  23  24

Fig. 5

$$H_{C1} \cdot V^T = \begin{pmatrix} S_{10} \\ S_{11} \\ S_{12} \\ S_{13} \end{pmatrix} = \begin{pmatrix} 1 & 1 & 1 & 1 & 1 & \text{---} & 1 & 1 & 1 \\ \alpha^{31} & \alpha^{30} & \alpha^{29} & \alpha^{28} & \text{---} & \alpha^{3} & \alpha^{2} & \alpha^{1} \\ \alpha^{62} & \alpha^{60} & \alpha^{58} & \alpha^{56} & \text{---} & \alpha^{6} & \alpha^{4} & \alpha^{2} \\ \alpha^{93} & \alpha^{90} & \alpha^{87} & \alpha^{84} & \text{---} & \alpha^{9} & \alpha^{6} & \alpha^{3} \end{pmatrix} \begin{pmatrix} W_{12n-12,A} \\ W_{12n-12(1D+1),B} \\ W_{12n+1-12(2D+1),A} \\ W_{12n+1-12(3D+1),B} \\ \cdot \\ \cdot \\ \cdot \\ P_{12n} \\ P_{12n+1} \\ P_{12n+2} \\ P_{12n+3} \end{pmatrix}$$

6

Fig. 6

$$H_{c2} \cdot V^T = \begin{pmatrix} S_{20} \\ S_{21} \\ S_{22} \\ S_{23} \end{pmatrix} = \begin{pmatrix} 1 & 1 & 1 & \text{------} 1 & 1 & 1 & 1 \\ \alpha^{27} & \alpha^{26} & \alpha^{25} & \text{------} \alpha^4 & \alpha^3 & \alpha^2 & 1 \\ \alpha^{54} & \alpha^{52} & \alpha^{50} & \text{------} \alpha^8 & \alpha^6 & \alpha^4 & 1 \\ \alpha^{81} & \alpha^{78} & \alpha^{75} & \text{------} \alpha^{12} & \alpha^9 & \alpha^6 & 1 \end{pmatrix} \begin{pmatrix} W_{12n-12,A} \\ W_{12n-12,B} \\ W_{12n+1-12,A} \\ W_{12n+1-12,B} \\ \vdots \\ \vdots \\ Q_{12n} \\ Q_{12n+1} \\ Q_{12n+2} \\ Q_{12n+3} \end{pmatrix}$$

EP 0 137 855 B1

Fig. 7

EP 0 137 855 B1

Fig. 8

| | | 3BITS | 3BITS | ← 8BITS → | ← 16 BITS → |
|---|---|---|---|---|---|
| 1 | 0 0 | MODE | ITEM | INSTRUCTION | ADDRESS |
| 2 | 0 1 | MODE | ITEM | INSTRUCTION | ADDRESS |

DATA

$( 31 \times 10 = 310 $ BITS $)$

← 32 BITS →

Fig. 9

| 1 | W 11 | W 21 |
|---|---|---|
| 2 | W 12 | W 22 |

← 16 BITS → ← 16 BITS →
(L-ch) (R-ch)

Fig. 10

← 300 →

216

← 4 BLOCKS →

9

Fig. 11

Fig. 12

Fig. 13

| 00 | 010 | 001 | INSTRUCTION | ROW | COLUMN |
|---|---|---|---|---|---|
| 01 | 010 | 001 | INSTRUCTION | ROW | COLUMN |

1 — 00 | 010 | 001 | INSTRUCTION | ROW | COLUMN
2 — 01 | 010 | 001 | INSTRUCTION | ROW | COLUMN
3 — 1 | Y1 | Y2 | Y3 | Y4
4 — 1 | Y5 | Y6 | Y7 | Y8
5 — 1 | Y9 | Y10 | Y11 | Y12
6 — 1 | Y13 | Y14 | Y15
7 — 1 | Y16 | Y17 | Y18 | Y19
8 — 1 | Y20 | Y21 | V1 | V2
9 — 1 | V3 | V4 | V5 | V6
10 — 1 | V7 | U1 | U2 | U3
11 — 1 | U4 | U5 | U6 | U7
12 — 1

Fig. 14

| ITEM | CHANNEL | SF(kHz) | NUMBER OF BITS | QUANTI-ZATION | MAGNIFICATION FACTOR |
|---|---|---|---|---|---|
| 0 0 0 | MUTING | | | | |
| 0 0 1 | 2 ch | 22.05 | 10 | NONLINEAR | $2/5$ |
| 0 1 0 | 3 ch | 22.05 | 10 | NONLINEAR | $3/5$ |
| 0 1 1 | 5 ch | 22.05 | 10 | NONLINEAR | 1 |
| 1 0 0 | 2 ch | 33.075 | 12 | NONLINEAR | $3/4$ |

Fig. 15A   P  P  P  P  P  P  P  P  P  P

Fig. 15B   P  P  P  S  S  P  P  P  S  S

Fig. 15C   P  P  S  S  S  P  P  S  S  S

Fig. 15D   P  S  S  S  P  S  S  S  P  S

Fig. 15E   S  S  S  S  S  S  S  S  S  S

Fig. 16

Fig. 17

Fig.  18

| | | | INSTRUCTION | ADDRESS | | |
|---|---|---|---|---|---|---|
| 0 0 | 1 0 0 | 0 0 1 | INSTRUCTION | ADDRESS | | |
| 0 1 | 1 0 0 | 0 0 1 | INSTRUCTION | ADDRESS | | |

| 1 | D1 | D2 | D3 | D4 |
|---|---|---|---|---|
| 1 | D1 | D2 | D3 | D4 |
| 1 | D5 | D6 | D7 | D8 |
| 1 | D5 | D6 | D7 | D8 |
| 1 | D9 | D10 | D11 | D12 |
| 1 | D9 | D10 | D11 | D12 |
| 1 | D13 | D14 | D15 | D16 |
| 1 | D13 | D14 | D15 | D16 |
| 1 | D16 | D17 | D18 | D19 | |
| 1 | D16 | D17 | D18 | D19 | |

Fig.  19

| | W 11 | | W 21 | |
|---|---|---|---|---|
| 1 | D 11 | D 21 | D 31 | D 41 |
| 1 | D 12 | D 22 | D 32 | D 42 |
| | W 12 | | W 22 | |

Fig. 20

Fig. 21

EP 0 137 855 B1

Fig. 22

DATA OF ONE FRAME

| 1 | 2 | 3 | 4 | 5 | 6 | 7 | 8 | 9 | 10 | 11 | 12 | 1 | 2 | 3 | 4 | 5 | 6 | 7 | 8 | 9 | 10 | 11 | 12 |

MSB 8
7
6
5
4
3
2
LSB 1

| MODE | ITEM |
| INSTRUC-TION | ROW |
| ROW | COLUMN |

ROW | COLUMN | $Y_{11}$ $Y_{12}$ $Y_{13}$ | $U_1$ | $V_1$ | $Y_{21}$ $Y_{22}$ $Y_{23}$ | $U_2$ | $V_2$ | AUDIO DATA (A CH) | AUDIO DATA (B CH) | AUDIO DATA (C CH)

Fig. 23

DATA OF ONE FRAME

| 1 | 2 | 3 | 4 | 5 | 6 | 7 | 8 | 9 | 10 | 11 | 12 | 1 | 2 | 3 | 4 | 5 | 6 | 7 | 8 | 9 | 10 | 11 | 12 |

MSB 8
7
6
5
4
3
2
LSB 1

| MODE | ITEM |
| INSTRUC-TION | ROW |
| ROW | COLUMN |

ROW | COLUMN | $Y_{11}$ $Y_{12}$ $Y_{13}$ | $U_1$ | $V_1$ | AUDIO DATA (A CH) | AUDIO DATA (B CH) | AUDIO DATA (C CH) | AUDIO DATA (D CH) | AUDIO DATA (E CH)

Fig. 24

31... disc player,

32L, 32R... output terminals of the stereo music

signals,

40... logging circuit,

41... controller,

43... data selector,

48... CRT display,

49... frame memory,

51... sound memory,

61... compact disc,

63... servo circuit,

65... sync detector,

66... data separating circuit,

67... control data regenerating circuit,

71, 72... low-pass filters,

75... clock generator.